Europäisches Patentamt

European Patent Office

Office européen des brevets

(19)

(11)  **EP 0 902 897 B1**

(12)  **FASCICULE DE BREVET EUROPEEN**

(45) Date de publication et mention
de la délivrance du brevet:
**12.09.2001  Bulletin 2001/37**

(21) Numéro de dépôt: **97926082.5**

(22) Date de dépôt: **03.06.1997**

(51) Int Cl.[7]: **G01S 1/02**

(86) Numéro de dépôt international:
**PCT/FR97/00966**

(87) Numéro de publication internationale:
**WO 97/47983 (18.12.1997 Gazette 1997/54)**

(54)  **RECEPTEUR DE SIGNAUX DE SATELLITES AVEC CONTROLE D'INTEGRITE DE CALCUL DE VITESSE**

SATELLITENEMPFÄNGER MIT PRÜFUNG DER INTEGRITÄT MITTELS BERECHNUNG DER GESCHWINDIGKEIT

SATELLITE SIGNAL RECEIVER WITH SPEED COMPUTING INTEGRITY CONTROL

(84) Etats contractants désignés:
**DE FR IT**

(30) Priorité:  **07.06.1996  FR 9607072**

(43) Date de publication de la demande:
**24.03.1999  Bulletin 1999/12**

(73) Titulaire: **THALES AVIONICS S.A.**
**78141 Vélizy Villacoublay Cédex (FR)**

(72) Inventeur: **ARETHENS, Jean-Pierre,**
**Thomson-CSF S.C.P.I.**
**F-94117 Arcueil Cedex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**US-A- 5 347 546          US-A- 5 436 632**
**US-A- 5 504 492**

• **500 YEARS AFTER COLUMBUS - NAVIGATION CHALLENGES OF TOMORROW, MONTEREY, CA., MAR. 23 - 27, 1992, no. -, 1 Janvier 1992, INSTITUTE OF ELECTRICAL AND ELECTRONICS ENGINEERS, pages 464-472, XP000344339 LEE Y C: "RECEIVER AUTONOMOUS INTEGRITY MONITORING (RAIM) CAPABILTY FOR SOLE-MEANS GPS NAVIGATION IN THE OCEANIC PHASE OF FLIGHT"**

**Description**

L'invention concerne les récepteurs de positionnement par satellite tels que les récepteurs GPS (Global Positionning System).

Le système GPS utilise une constellation de satellites qui tournent autour de la terre sur des orbites très précisément déterminées, c'est-à-dire qu'on peut connaître à tout instant la position d'un satellite quelconque. Les satellites émettent des signaux radiofréquence, contenant des données de navigation et des codes qui permettent d'identifier chaque satellite. Ces codes modulent en phase une fréquence porteuse. Un récepteur GPS, au sol ou sur un véhicule terrestre, aérien ou maritime, peut recevoir les signaux de plusieurs satellites simultanément, calculer précisément sa distance à chacun des satellites, et en déduire sa position précise en latitude, longitude, et altitude, dans un repère terrestre. Il peut en déduire aussi la date et l'heure précise de la réception dans le repère temporel du système GPS. Il peut enfin en déduire, par des mesures doppler, son propre vecteur vitesse dans le repère terrestre (cas d'un récepteur monté sur un véhicule mobile).

Dans le système GPS, chaque satellite est identifié par un code pseudo-aléatoire qui lui est propre et qui module de manière répétitive (toutes les millisecondes par exemple) une fréquence porteuse émise par le satellite. Il existe des systèmes voisins du GPS, notamment le système GLONASS, dans lequel ce code pseudo-aléatoire existe également bien qu'il ne serve pas à identifier un satellite individuel. L'invention qui va être décrite est applicable directement au système GLONASS mais pour plus de simplicité on ne se référera dans la suite qu'au système GPS, et plus précisément à la partie "civile" du système GPS, lequel comporte aussi une partie militaire.

Le code pseudo-aléatoire est un code long (1023 bits à 1,023 MHz, soit 1 milliseconde), et une de ses fonctions principales est de permettre l'extraction du signal du satellite dans un niveau de bruit beaucoup plus élevé (30 dB par exemple) que le niveau du signal. Cette technique est maintenant bien connue sous le nom d'émission à étalement de spectre. Le signal est extrait du bruit grâce à une opération de corrélation, dans le récepteur, entre le signal reçu et un code pseudo-aléatoire périodique qui est identique à celui que l'on s'attend à trouver dans le signal. Si les codes ne coïncident pas temporellement, il n'y a aucune corrélation entre les signaux reçus et le code local engendré par un générateur de code local; s'ils coïncident presque, il y a une certaine corrélation, l'énergie de corrélation étant d'autant plus forte que la coïncidence est plus exacte. On peut donc établir un signal de corrélation permettant d'asservir un générateur de code local jusqu'à obtenir une coïncidence exacte du code local et du code modulant le signal émis par le satellite. Une boucle d'asservissement de code permet ensuite de maintenir cette coïncidence.

Le code pseudo-aléatoire est émis par le satellite à des instants extrêmement précis et connus au niveau du récepteur. On se sert de l'opération de corrélation pour déterminer l'instant d'arrivée de ce code dans le récepteur : on détermine l'instant caractéristique ou époque d'émission du code local, et comme ce code local coïncide avec le code reçu lorsque la corrélation maximale est établie, cet instant représente l'instant d'arrivée du code reçu. La différence entre un instant d'émission du code par le satellite et un instant de réception du code par le récepteur permet de déterminer un temps de parcours des signaux entre le satellite et le récepteur. Sachant que la vitesse de parcours des signaux est la vitesse de la lumière, on peut calculer la distance entre le récepteur et un satellite donné. La même opération faite sur deux autres satellites permet, par triangulation, de déterminer la position exacte du récepteur par rapport aux trois satellites.

En utilisant un quatrième satellite, on élimine les erreurs d'horloge du récepteur, l'horloge du récepteur n'étant pas aussi précise que celle des satellites. Outre la position du récepteur on peut alors calculer un temps précis de la mesure de position, dans le repère de temps des satellites GPS.

La position de chacun des satellites est connue à tout instant : elle est calculée à partir de tables stockées dans le récepteur et remises à jour par le message de navigation diffusé par les satellites. La vitesse des satellites, à tout instant est également calculable à partir de ces tables.

On peut déduire, à partir des signaux envoyés par quatre satellites, le temps et la position du récepteur par rapport aux quatre satellites. Et, par changement de coordonnées on obtient la position du récepteur dans un repère terrestre fixe.

De même, la vitesse du récepteur est calculée à partir d'une mesure d'effet Doppler sur la fréquence porteuse du signal radiofréquence envoyé par les satellites. On peut donc calculer la vitesse relative du récepteur par rapport à chacun des satellites, selon l'axe directeur qui relie ce satellite au récepteur. Quatre satellites sont nécessaires pour éliminer l'ambiguïté sur le temps. On obtient quatre vecteurs de vitesse relative différents, sur les axes directeurs reliant le récepteur aux quatre satellites. Des calculs simples permettent de déterminer la dérive temporelle de l'horloge du récepteur par rapport au temps GPS et la vitesse du récepteur selon trois axes dans le repère terrestre à partir de ces quatre vecteurs vitesse et des informations suivantes :

- les directions des axes directeurs récepteur-satellite par rapport à un repère terrestre fixe (longitude, latitude, altitude); ces directions sont obtenues elles-mêmes par la connaissance de la position du récepteur à un instant donné et la position de chaque satellite à ce même instant;
- les vitesses individuelles des satellites dans le repère terrestre à cet instant.

Mais si l'on utilise plus de quatre satellites, on obtient une information redondante. C'est le cas pour les récepteurs de qualité professionnelle utilisés notamment dans l'aéronautique.

Si l'utilisation de toutes les informations redondantes aboutissait exactement à un même résultat de calcul de vitesse, on pourrait se contenter de prendre quatre satellites quelconques parmi les satellites de la constellation observée à un moment donné.

Mais des imprécisions diverses affectent les mesures, de sorte que la redondance n'est pas parfaite. De plus, un satellite peut fonctionner de manière défectueuse à un moment donné et fournir alors des informations aberrantes polluant la détermination de vitesse.

Dans certaines applications des récepteurs GPS, il peut être important de déterminer la vitesse avec précision et avec certitude. C'est le cas par exemple pour des récepteurs utilisés dans l'aide à l'atterrissage des avions.

C'est pourquoi la présente invention propose de calculer les vitesses relatives entre le récepteur et les satellites à l'aide de plus de quatre satellites, de déduire des différentes mesures une information sur l'intégrité de la vitesse calculée, et de fournir une indication du fait que la mesure n'est pas valide si l'intégrité de la mesure de vitesse n'est pas suffisante.

Par "intégrité" de la mesure, on entend une quantité qui représente la compatibilité plus ou moins grande des mesures effectuées sur un ensemble de plus de quatre satellites, c'est-à-dire qui représente le fait que les mesures de vitesse obtenues en prenant un groupe de quatre satellites parmi n sont plus ou moins identiques aux mesures de vitesse obtenues en choisissant d'autres groupes de quatre satellites parmi les n.

Plus précisément, l'invention propose un récepteur de positionnement par satellites, comprenant des moyens de calcul de position utilisant simultanément un nombre de satellites n supérieur à 4, des moyens de calcul de vitesse du récepteur aptes à déterminer la vitesse du récepteur selon les axes directeurs reliant le récepteur à chacun des n satellites, et des moyens de calcul d'un vecteur vitesse du récepteur dans un repère terrestre fixe à partir des vitesses selon les axes directeurs et à partir d'une matrice de vecteurs représentant les directions de ces axes directeurs dans le repère fixe, ce récepteur étant caractérisé en ce qu'il comprend en outre des moyens pour calculer une valeur représentative de la divergence entre les mesures de vitesses sur les n axes directeurs, cette valeur représentant une information sur la validité du vecteur vitesse du récepteur dans le repère fixe.

Si l'intégrité n'est pas suffisante, c'est-à-dire si la mesure de la divergence dépasse un seuil déterminé, le récepteur peut fournir une indication d'invalidité de la mesure, mais il peut aussi déclencher une recherche du satellite qui a entraîné une divergence anormale, et une élimination temporaire de ce satellite.

De préférence, la quantité qui représente la divergence, ou l'absence d'intégrité, est un résiduel $\Delta V$ égal à la norme d'un vecteur qui est le produit S.VD, où S est une matrice nxn définie ci-après, n étant le nombre de satellites utilisés, et VD étant un vecteur de vitesse mesurée dont les composantes sont les n mesures de vitesse selon les axes directeurs entre le récepteur et chacun des n satellites; la matrice S est calculée à partir de la formule suivante où H est la matrice des cosinus directeurs, c'est-à-dire une matrice nx4 représentant les directions des axes directeurs dans un repère spatio-temporel terrestre fixe; $H^T$ est la transposée de cette matrice, et I est la matrice identité nxn :

$$S = I - H(H^T.H)^{-1}.H^T.$$

La norme du produit matriciel S.VD est $\Delta V = (|S.VD|)^2$

Le seuil d'intégrité est de préférence choisi à partir d'une valeur de probabilité de fausse alarme acceptable dans l'application considérée. Ce seuil dépend du nombre de satellites utilisés.

La quantité qui représente la divergence et qui est comparée à un seuil est de préférence une quantité normée par rapport à un bruit de mesure estimée d'énergie $\sigma^2$. Dans ce cas, le résiduel calculé est le résiduel normé $\Delta V_{nr} = \Delta V/\sigma^2$.

Le bruit estimé peut être une valeur fixe choisie a priori en fonction de l'application, ou une valeur mesurée à partir de l'ensemble des mesures de vitesse effectuées précédemment. Dans une solution avantageuse, on utilise comme estimation du bruit $\sigma^2$ une moyenne glissante du rapport $\Delta V/n-4$ entre le résiduel et le nombre n-4 de degrés de liberté du calcul de vitesse. Le nombre de degrés de liberté représente le nombre de satellites utilisés moins le nombre de satellites strictement nécessaire à ce calcul.

On prévoit par ailleurs des moyens de calcul d'une limite d'erreur de vitesse, représentant la qualité du contrôle d'intégrité effectué. Cette limite est une erreur de vitesse maximale que le système a une probabilité PND de ne pas détecter. Autrement dit, c'est une erreur de vitesse liée à un seuil de probabilité choisi, telle que lorsqu'on se fixe une certaine probabilité, dite probabilité de non-détection, il existe cette probabilité pour que le système ne voie pas cette erreur de vitesse.

Cette limite peut être affichée pour l'utilisateur, ou bien, si elle dépasse un seuil déterminé, elle peut servir à fournir une indication d'absence de fiabilité de la mesure de vitesse.

D'autres caractéristiques et avantages de l'invention apparaîtront à la lecture de la description détaillée qui suit et qui est faite en référence aux dessins annexés dans lesquels la figure unique représente la constitution générale d'un récepteur GPS dans lequel la présente invention peut être mise en oeuvre.

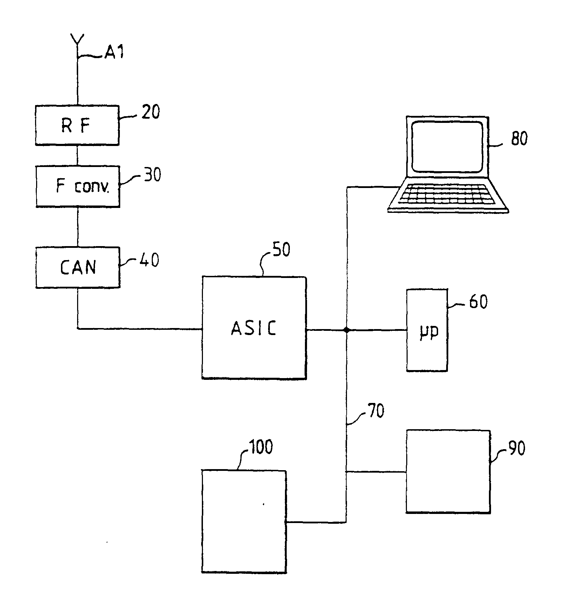

La figure 1 rappelle sommairement le principe général d'un récepteur GPS. Le récepteur comporte une partie radiofréquence, comprenant une antenne A1, un amplificateur radiofréquence 20 et divers circuits de filtrage associés, des circuits de conversion de fréquence 30, et un convertisseur analogique-numérique 40. Le convertisseur permet de fournir des signaux numériques à relativement basse fréquence destinés à être traités dans un circuit de traitement de signal numérique 50. Ce circuit est contrôlé par un microprocesseur 60 et des logiciels de calcul et de contrôle associés.

Le microprocesseur 60 a deux fonctions :

- d'une part, il élabore des données numériques utilisées par le circuit de traitement de signal numérique 50, à partir de données numériques fournies par ce circuit; en particulier, il effectue des calculs numériques nécessaires aux boucles d'asservissement numérique présentes dans le circuit de traitement numérique 50;
- et d'autre part il fournit des résultats définitifs de calcul de position, de temps, et de vitesse à l'utilisateur, c'est-à-dire soit sur un écran d'affichage numérique soit sur un bus numérique vers d'autres appareils qui ont besoin des résultats.

On pourrait évidemment avoir deux processeurs séparés pour effectuer ces deux fonctions. Dans la réalisation avec un seul microprocesseur 60, on a représenté un bus d'échanges 70 entre le microprocesseur 60, le circuit de traitement 50, un périphérique d'entrée/sortie 80, les mémoires de travail 90, et les mémoires de programmes 100 qui contiennent les programmes nécessaires au fonctionnement du microprocesseur.

Très sommairement, le circuit de traitement de signal numérique comporte soit un seul canal de traitement, les informations issues des divers satellites étant traitées de manière multiplexée, soit de préférence plusieurs canaux travaillant en parallèle chacun sur un satellite déterminé.

Chaque canal comporte une double boucle d'asservissement : asservissement de phase de porteuse et asservissement de phase de code.

La boucle de phase de porteuse utilise essentiellement un oscillateur local à contrôle numérique de phase, fournissant une phase numérique périodique (en dent de scie) à une fréquence correspondant à la fréquence de porteuse transposée, en tenant compte de l'effet doppler qui affecte la fréquence de porteuse transmise par un satellite. L'effet doppler est pris en compte du fait même de l'existence des boucles d'asservissement. Le microprocesseur 60 calcule un signal d'erreur de phase de porteuse; ce signal sert à commander l'oscillateur local pour asservir une fréquence porteuse locale sur la fréquence porteuse reçue du satellite.

La boucle d'asservissement de phase de code comporte un générateur de code local, piloté par un oscillateur à contrôle numérique de phase. Elle permet d'asservir les codes locaux sur le code reçu du satellite et de pouvoir ensuite déterminer la position temporelle exacte des codes locaux ainsi asservis. Le code local est corrélé avec le code reçu du satellite; le signal de corrélation est calculé par le microprocesseur et sert à asservir la boucle pour amener le code local en synchronisme avec le code reçu du satellite.

Les deux boucles d'asservissement, de code et de porteuse prennent en compte le décalage de fréquence doppler sur la fréquence porteuse et sur le code, résultant du déplacement relatif de l'avion et du satellite détecté. Ce décalage doppler est mesurable dans les boucles.

Les calculs de temps et de position GPS sont effectués à partir de l'état des boucles d'asservissement à un instant de mesure déterminé. A cet instant, on lit l'état exact de la phase des deux oscillateurs à contrôle numérique de phase.

Les boucles d'asservissement prévues dans le récepteur agissent pour caler une fréquence locale sur la fréquence porteuse reçue des satellites. Le décalage entre cette fréquence locale et la fréquence stable et connue émise par les satellites donne une indication de décalage doppler donc de différence entre la vitesse du satellite et la vitesse du récepteur selon l'axe reliant le satellite au récepteur. Comme on le verra plus loin, cette indication doppler doit être corrigée de l'erreur de fréquence d'horloge locale du récepteur, erreur qui peut être mesurée par la dérive temporelle de l'horloge locale par rapport au temps GPS.

Le récepteur calcule donc, pour les n différents satellites observés à un instant donné (n supérieur ou égal à 4), sa position relative par rapport à ces satellites. Il en déduit les directions des axes d'observation de chacun des satellites.

Il mesure par ailleurs la pseudo-vitesse, ou vitesse relative $PV_i$ entre le récepteur et le satellite de rang i, selon l'axe reliant le récepteur au satellite de rang i (i variant de 1 à n). La vitesse absolue du satellite de rang i dans le repère terrestre est connue. Le récepteur calcule alors la vitesse du satellite projetée sur l'axe directeur de rang i : c'est la vitesse $Vrsat_i$ Une correction de dérive d'horloge du satellite $c.Dersat_i$ est calculable à partir des données de navigation envoyées par le satellite; c est la vitesse de la lumière; $Dersat_i$ est la dérive d'horloge du satellite de rang i, c'est-à-dire la variation, au cours du temps, du biais de temps de l'horloge du satellite : le biais de temps de l'horloge du satellite est l'écart entre le temps que donne cette horloge et le temps défini au sol pour l'ensemble du système GPS. Ce biais peut varier au cours du temps du fait des écarts de fréquence des horloges des satellites par rapport à une valeur théorique.

On en déduit la vitesse absolue du récepteur dans le repère terrestre fixe, mais projetée sur l'axe directeur de rang i. Soit $Vdop_i$ cette vitesse absolue.

$$Vdop_i = PV_i + c.Dersat_i - Vrsat_i$$

L'ensemble des vitesses $Vdop_i$, pour i =1 à n, forme un vecteur vitesse absolue VD mesurée, qui est une matrice nx1 de n vitesses individuelles.

Dans un repère terrestre fixe à trois dimensions, la vitesse absolue du récepteur pourrait être exprimée par un vecteur vitesse absolue à trois composantes V1, V2, V3. Toutefois, étant donné la dérive d'horloge locale du récepteur, qui influe directement sur la mesure de vitesse puisque les vitesses sont déterminées par effet Doppler sur les fréquences, on préfère exprimer la vitesse absolue du récepteur dans un repère à quatre dimensions : trois dimensions de l'espace dans un repère terrestre fixe et une dimension temporelle sous forme d'une dérive de vitesse calculable V4 = c. Dhr, où Dhr est une variation du biais d'horloge du récepteur au cours du temps. Le biais d'horloge du récepteur, calculable par le récepteur GPS lui-même dès lors qu'il y a au moins quatre satellites observés, est l'écart entre le temps donné par l'horloge du récepteur et le temps défini par le système GPS dans son ensemble. Dhr est la variation temporelle de ce biais. La correction de vitesse est le produit de Dhr par la vitesse de la lumière c.

La vitesse absolue du récepteur dans le repère terrestre peut donc s'exprimer sous forme d'un vecteur VABS à quatre composantes V1, V2, V3, V4, représentant respectivement les vitesses en longitude, latitude, altitude, et la correction due à la dérive d'horloge du récepteur.

Les vitesses absolues V1, V2, V3, V4 peuvent se déduire du vecteur vitesse VD à n composantes.

Si on appelle H la matrice (nx4) des cosinus directeurs, c'est-à-dire une matrice de n vecteurs (à quatre dimensions dans le repère terrestre fixe avec une composante temporelle unitaire) représentant les directions des axes directeurs de rang i = 1 à n, on devrait avoir l'égalité :

$$VD = H. VABS \qquad (1)$$

ce qui signifie que les mesures de vitesse du récepteur selon les axes directeurs (considérés comme repère fixe) peuvent être projetées dans le repère terrestre à quatre dimensions pour avoir un vecteur vitesse à quatre dimensions uniquement.

La matrice des cosinus directeurs est une matrice de n lignes de quatre coefficients $C_{i,x}$, $C_{i,y}$, $C_{i,z}$, 1, où $C_{i,x}$, $C_{i,y}$, $C_{i,z}$, représentent les cosinus des angles entre le i$^{ème}$ axe et les axes Ox, Oy, Oz (longitude, latitude, altitude) du repère terrestre, O étant la position du récepteur.

En réalité, du fait du bruit de mesure, il y a un écart entre VD et H.VABS et l'intégrité de la mesure de vitesse par plus de quatre satellites peut être représentée par une mesure de cet écart entre VD et H.VABS.

Si on se fixe un critère d'optimisation pour trouver le vecteur VABS qui est le plus représentatif de la vitesse dans le repère terrestre à partir du vecteur VD, on peut calculer VABS. Mathématiquement, si on adopte un critère dit "des moindres carrés", l'équation matricielle ci-dessus, VD = H.VABS, admet la solution suivante :

$$VABS = (H^T.H)^{-1}.H^T.VD, \qquad (2)$$

$H^T$ est la transposée de H; c'est une matrice 4xn

L'intégrité du calcul de la vitesse peut être évaluée quantitativement à partir de la valeur suivante $\Delta V$, qu'on appellera "résiduel de l'erreur de calcul"

$$\Delta V = (|VD - H.VABS|)^2 \qquad (3)$$

c'est-à-dire que le résiduel $\Delta V$ est la norme du vecteur différence entre le vecteur vitesse mesurée VD et le produit vectoriel H.VABS. C'est d'ailleurs cette quantité que l'on minimise lorsqu'on utilise le critère des moindres carrés.

Ce résiduel $\Delta V$ est d'autant plus grand que les mesures effectuées par les n satellites coïncident moins bien. C'est une mesure de la divergence entre les n mesures selon les axes directeurs.

Si on appelle S la matrice nxn égale à I - H($H^T$.H)$^{-1}$.$H^T$, où I est la matrice identité nxn, alors on peut écrire, à partir de de (2) et (3) :

$$\Delta V = (|S.VD|)^2 \qquad (4)$$

Dans cette hypothèse où la valeur représentative de l'intégrité de calcul de vitesse est le résiduel $\Delta V$ défini ci-dessus, l'invention repose essentiellement sur le calcul de la norme du vecteur S.VD à partir de la matrice des cosinus directeurs H et des mesures de vitesses individuelles sur les n axes directeurs, et la comparaison du résultat à un seuil pour déterminer si la mesure est acceptable ou non. En effet le seuil risque d'être dépassé dès lors qu'un satellite fournit une mesure anormale c'est-à-dire qui sort de la distribution statistique normale (gaussienne) des bruits de mesure.

On définit donc un seuil à ne pas dépasser pour la norme du produit vectoriel S.VD. Une indication de dépassement est fournie à l'utilisateur pour lui indiquer que la mesure de vitesse n'est pas fiable. Ou bien on fournit à l'utilisateur une indication de valeur de $\Delta V$, donc une indication de la qualité de la mesure.

Les seuils d'intégrité peuvent bien entendu varier d'une application à l'autre.

En pratique, on calculera plutôt un résiduel "normé", c'est-à-dire rapporté à un bruit de mesure estimé $\sigma^2$. Le résiduel normé sera $\Delta V_{nr} = \Delta V/\sigma^2$. On indiquera plus loin comment on détermine une valeur de bruit pour effectuer ce calcul.

Dans ce cas, on montre que l'on peut se fixer un seuil T acceptable pour le résiduel normé, ce seuil dépendant essentiellement d'une probabilité de fausse alarme maximale qu'on choisira et dépendant du nombre n de satellites utilisés.

On va donner ci-après, à titre d'exemple une indication de méthode de calcul permettant de définir un seuil d'alarme T réaliste.

Dans cet exemple, on fait l'hypothèse suivante : les erreurs de mesure de vitesse sont distribuées statistiquement selon des lois gaussiennes. On démontre alors que le résiduel $\Delta V_{nr}$, qui peut être identifié à une somme de carrés de variables aléatoires gaussiennes, suit une loi de répartition dite loi du $\chi^2$ à n-4 degrés de liberté. Le nombre de degrés de liberté est le nombre de satellites observés, n, moins le nombre de satellites indispensables à la mesure de vitesse, ici 4 en supposant que quatre satellites sont nécessaires pour donner un vecteur vitesse à quatre dimensions.

Dans le cas d'une telle loi de probabilité gaussienne, on sait calculer une probabilité de fausse alarme PFA c'est-à-dire la probabilité que le résiduel $\Delta V_{nr}$ soit supérieur au seuil T alors qu'il n'y a pas d'erreur de calcul de vitesse. La probabilité de fausse alarme est :

$$PFA = Q(T|n\text{-}4) \qquad (5)$$

où Q est une loi de probabilité à n-4 degrés de libertés qui se déduit de la loi P de probabilité du $\chi^2$ à n-4 degrés de liberté par la formule Q = 1-P. La loi de probabilité P sera exprimée par la représentation symbolique suivante : $P(\chi^2|n\text{-}4)$

et donc, avec la même notation, on aura

$$Q\,(\chi^2|n\text{-}4) = 1 - P(\chi^2|n\text{-}4) \qquad (6)$$

Si on trace les courbes représentant les lois de probabilité du $\chi^2$ en fonction de T pour chaque valeur n, et si on se fixe une probabilité donnée PFA (de fausse alarme), on trouve pour chaque valeur de n une valeur de seuil T respective qui est l'abscisse de la courbe correspondant à la valeur de n, pour une ordonnée égale à PFA. Ces seuils sont regroupés dans un tableau et seront les seuils utilisés pour le contrôle d'intégrité.

Mathématiquement, on peut considérer que pour une probabilité de fausse alarme PFA donnée on calcule le seuil T :

$$T = Q^{-1}\,(PFA) \qquad (7)$$

$Q^{-1}$ est la fonction inverse de $Q\,(\chi^2|n\text{-}4)$ c'est-à-dire que si Q(x) = a, alors x = $Q^{-1}$(a).

A titre d'exemple, ayant tracé les courbes de probabilité du $\chi^2$ on a calculé les seuils pour une probabilité de fausse alarme arbitrairement choisie (mais réaliste) de $10^{-3}$. Les valeurs normées du seuil T pour un nombre n de satellites compris entre 5 et 10 sont alors les suivantes (approximativement) :

| n= | 5 | 6 | 7 | 8 | 9 | 10 |
|----|----|----|----|----|----|----|
| T= | 10 | 14 | 16 | 18 | 20 | 22 |

Les seuils T qu'on calcule ainsi seront donc utilisés selon l'invention : lorsque dans une mesure de vitesse on va calculer la matrice H, puis la matrice S, puis la norme $\Delta V_{nr}$ du produit vectoriel S.VD, on comparera cette norme au seuil T (choisi en fonction du nombre de satellites utilisés, dans une table contenant une valeur de seuil pour chaque valeur de n).

Les calculs qui permettent de déterminer la divergence $\Delta V_{nr}$ nécessitent une estimation des bruits de mesure de vitesse. En général ces paramètres sont prédéterminés à partir de mesures statistiques. Une valeur réaliste pour σ est 0,2 m/s. Ce bruit résulte en effet principalement, dans le système GPS, de la disponibilité sélective ("Selective Availability") qui est une variation de fréquence d'horloge des satellites, introduite pour dégrader volontairement la précision de position qu'on peut obtenir.

Cependant, on peut obtenir une estimation du bruit de mesure par un calcul statistique à partir des résiduels d'erreur de vitesse AV, car on peut démontrer que l'espérance mathématique du résiduel d'erreur de vitesse a pour valeur $(n\text{-}4)\sigma^{-2}$, n-4 étant le nombre de degrés de liberté de la résolution de vitesse, et σ étant le bruit de mesure de vitesse. Au bout d'un certain nombre de mesures on peut donc calculer une statistique de bruit de mesure et cette statistique est utilisée pour calculer le résiduel normé $\Delta V_{nr}$.

Le plus simple est de calculer $\Delta V$ par exemple toutes les 200 ms (cadence de fourniture des mesures de vitesse) puis de calculer une moyenne glissante des termes $\Delta V$/n-4, sur quelques minutes, et cette moyenne représente l'estimation du carré du bruit de mesure. Elle suppose naturellement que le système est intègre. Au départ, la valeur de σ peut être fixée arbitrairement, par exemple à 0,2 m/s, avant qu'on ne dispose d'une valeur moyenne glissante.

Outre l'indication de défaut d'intégrité de mesure de vitesse (dépassement du seuil T par $\triangle V_{nr}$), on peut fournir aussi une indication de la qualité de la surveillance d'intégrité effectuée.

En effet, il n'est pas suffisant de savoir que la mesure est intègre avec une probabilité de fausse alarme déterminée. Il serait mieux de connaître également quelle est la probabilité de non détection d'une erreur de vitesse.

C'est pourquoi on propose selon l'invention de fixer une probabilité de non-détection maximale qu'on peut tolérer dans le récepteur, et d'en déduire quelle est la limite d'erreur de vitesse qui en résulte et au delà de laquelle la mesure sera considérée comme non fiable.

Par exemple, on se fixe une probabilité maximale de non-détection de $10^{-2}$, c'est-à-dire qu'on tolère au maximum une chance sur 100 que le système ne voie pas une erreur de vitesse, et on calcule cette erreur de vitesse qui donne lieu à une chance sur 100 de n'être pas détectée.

Lorsqu'on se fixe une telle probabilité PND, on peut calculer un paramètre géométrique $\Theta$, qui lui-même va servir à calculer un indicateur de contrôle de la qualité de surveillance d'intégrité effectuée.

On peut faire l'hypothèse suivante : on suppose que l'erreur de vitesse provient d'un biais de vitesse sur un des satellites (provenant par exemple d'une erreur de son horloge), et que la distribution de ce biais de vitesse est gaussienne ; on peut démontrer que le résiduel $\triangle V_{nr}$ suit une loi de répartition du $\chi^2$ non centrée, à n-4 degrés de liberté, de paramètre $\Theta$ proportionnel au biais, à n-4 degrés de liberté. Le paramètre $\Theta$ de la loi de probabilité non centrée $P'(\chi^2|n-4, \Theta)$ est alors :

$$\Theta = (B^2/\sigma^2)S_{i,i} \qquad (8)$$

B est le biais de vitesse;
$\sigma$ est l'estimation de l'écart type de bruit de mesure sur la vitesse;
$S_{i,i}$ est la sensibilité aux erreurs de vitesse selon l'axe i : mesure de l'erreur engendrée sur l'axe i par un biais sur l'axe i lui-même. C'est l'élément de rang i, i de la matrice S mentionnée ci-dessus à propos de l'équation (4).

Dans ces conditions, il existe une probabilité de non-détection, c'est-à-dire une probabilité pour que le résiduel de vitesse $\triangle V_{nr}$ soit inférieur au seuil T (fixé précédemment en fonction de PFA et de n) alors qu'il existe bien une erreur de calcul de vitesse due à un biais sur l'un des satellites.

On peut tracer les courbes représentant cette probabilité de non détection en fonction de $\Theta$ pour différentes valeurs possibles de n. Si on se fixe alors une probabilité de non-détection, on obtient un tableau de valeurs de $\theta$ pour différentes valeurs de n. Par exemple, si on fixe PND = $10^{-2}$, on obtient le tableau suivant (valeurs approximatives) pour n compris entre 5 et 10 satellites :

| n | 5 | 6 | 7 | 8 | 9 | 10 |
|---|---|---|---|---|---|----|
| $\Theta$ | 31,5 | 35 | 38 | 40 | 42 | 45 |

Or on peut montrer que $\theta$ est aussi égal à $(RPE/\sigma\Delta H_i)^2$, où RPE est le rayon de protection en vitesse, c'est-à-dire l'erreur de vitesse pour laquelle la probabilité de non détection est égale à PND, $\Delta H_i$ est une différence entre deux valeurs de "dilution de précision" XDOP liées à la constellation de satellites utilisée;

plus précisément, c'est la différence entre la dilution de précision XDOP de la constellation complète de n satellites, et la dilution de précision XDOP de la constellation de n-1 satellites excluant l'axe i. La dilution de précision XDOP est tirée de de la matrice $H^T.H^{-1}$ (matrice 4x4). C'est la racine carrée de la somme des termes de la diagonale de la matrice.

Si on s'intéresse surtout à la vitesse horizontale, on utilise plutôt la dilution de précision horizontale HDOP qui est la racine carrée de la somme des deux premiers termes de la diagonale. Si on s'intéresse uniquement à la vitesse verticale, on prend seulement le troisième terme de la diagonale (VDOP).

Le terme XDOP ou HDOP ou VDOP représente la qualité de la constellation de satellites au moment de la mesure et n'a pas la même valeur selon qu'on prend tous les satellites ou tous les satellites sauf le satellite de rang i. $\Delta H_i$ représente la différence du XDOP ou HDOP ou VDOP calculé dans les deux cas.

De tout cela, il résulte que si on se fixe une probabilité de non-détection PND, on peut en déduire les valeurs de critères géométriques $\Theta$ qui lient le rayon de protection et le $\Delta H_i$. Puis, en fonction de ces valeurs de $\Theta$, et de l'état de la constellation satellitaire observée à un moment donné, on peut calculer le rayon de protection de la surveillance d'intégrité de calcul de vitesse : ce rayon RPE est la valeur maximale trouvée pour le produit des trois valeurs suivantes :

- la racine carrée de $\Theta$,
- $\Delta H_i$
- $\sigma$

Ce produit est calculé pour tous les satellites i de 1 à n, et la valeur maximale trouvée représente le rayon de protection RPE.

$$RPE = max(\Theta^{1/2}.\Delta H_i.\sigma) \text{ pour } i = 1 \text{ à } n$$

Ce rayon de protection RPE, ou limite d'erreur de vitesse pour une probabilité de non détection donnée, s'exprime en unités de vitesse (m/s par exemple) et peut être affiché pour l'utilisateur ou donner lieu à une alarme s'il dépasse une valeur prédéterminée. L'alarme peut être une indication de "mesure de vitesse non fiable".

L'invention permet donc de fournir à la fois une alarme en cas d'intégrité insuffisante de la mesure de vitesse sur plus de quatre satellites et une valeur de rayon de protection en vitesse.

Lorsqu'une intégrité insuffisante est constatée, il est souhaitable de supprimer au moins temporairement les données provenant du satellite qui cause la perte d'intégrité. Pour cela, il faut déterminer quel est ce satellite.

Pour cela, on calcule le résiduel d'erreur de vitesse pour tous les groupes de n-1 satellites et on détermine pour quel rang i de satellite, le résiduel résultant des n-1 autres satellites ne provoque pas de dépassement de seuil d'intégrité alors que le résiduel pour n satellites provoque un dépassement.

Une fois qu'on a identifié le satellite qui a causé l'erreur, on supprime les données en provenance de ce satellite.

**Revendications**

1. Récepteur de positionnement par satellites, comprenant des moyens de calcul de position utilisant simultanément un nombre de satellites n au moins égal à 4, des moyens de calcul de vitesse du récepteur aptes à déterminer la vitesse du récepteur selon les axes directeurs reliant le récepteur à chacun des n satellites, et des moyens de calcul d'un vecteur vitesse du récepteur dans un repère terrestre fixe à partir des vitesses selon les axes directeurs et à partir d'une matrice de vecteurs représentant les directions de ces axes directeurs dans le repère fixe, ce récepteur étant **caractérisé en ce qu'**il comprend en outre des moyens pour calculer une valeur représentative de la divergence entre les mesures de vitesse sur les n axes directeurs, cette valeur représentant une information sur la validité du vecteur vitesse du récepteur dans le repère fixe.

2. Récepteur de positionnement par satellites selon la revendication 1, **caractérisé en ce que** les moyens pour calculer la valeur de divergence comprennent des moyens de calcul d'un résiduel d'erreur de vitesse $\Delta V$ égal à la norme $\Delta V = (|S.VD|)^2$ d'un produit vectoriel S.VD, où S est une matrice nxn, n étant le nombre de satellites utilisés, et VD est un vecteur vitesse mesurée dont les composantes sont les n mesures de vitesse selon les axes directeurs entre le récepteur et chacun des n satellites, la matrice S étant calculée à partir de la formule suivante où H est la une matrice nx4 des cosinus directeurs de ces axes dans un repère spatio-temporel terrestre fixe, $H^T$ est la transposée de cette matrice H, et I est la matrice identité nxn : $S = I - H(H^T.H)^{-1}.H^T$.

3. Récepteur selon la revendication 2, **caractérisé en ce que** les moyens de calcul de la divergence comprennent des moyens pour calculer un résiduel normé $\Delta V_{nr}$ égal à $\Delta V/\sigma^2$, où $\sigma$ est un bruit estimé de mesure de vitesse.

4. Récepteur selon la revendication 3, **caractérisé en ce que** le carré du bruit de mesure de vitesse est estimé à partir de moyens de calculs d'une moyenne glissante, sur plusieurs mesure successives, de $\Delta V/n-4$.

5. Récepteur selon l'une des revendications 1 et 2, **caractérisé en ce qu'**il comprend des moyens pour fournir un signal d'alerte si la mesure de divergence dépasse un seuil déterminé.

6. Récepteur selon la revendication 5, **caractérisé en ce que** le seuil est choisi dans une table contenant une valeur de seuil pour chaque nombre n de satellites.

7. Récepteur selon l'une des revendications 1 à 6, **caractérisé en ce qu'**il comprend des moyens pour calculer un rayon de protection en vitesse pour une probabilité de non détection donnée, à partir de la formule $RPE = \max (\theta^{1/2}.\Delta H_i.\sigma)$ pour i = 1 à n, où $\sigma$ est une valeur estimée de bruit de mesure de vitesse, $\theta$ est un paramètre choisi en fonction du nombre n dans une table comportant une valeur numérique respective pour diverses valeurs possibles de n, et $\Delta H_i$ est la différence entre la valeur du paramètre PDOP, qui est la dilution de précision de position, pour la constellation de n satellites et la valeur de ce même paramètre pour la constellation de n-1 satellites dans laquelle le premier satellite est exclu.

**Claims**

1. Satellite positioning receiver, comprising position calculating means which simultaneously use a number of n satellites at least equal to 4, receiver velocity calculating means capable of determining the velocity of the receiver along the director axes linking the receiver to each of the n satellites, and means for calculating a velocity vector of the receiver in a fixed terrestrial reference frame on the basis of the velocities along the director axes and on the basis of a matrix of vectors representing the directions of these director axes in the fixed reference frame, this receiver being **characterized in that** it also comprises means for calculating a value representative of the divergence between the velocity measurements on the n director axes, this value representing information regarding the validity of the velocity vector of the receiver in the fixed reference frame.

2. Satellite positioning receiver according to Claim 1, **characterized in that** the means for calculating the divergence value comprise means for calculating a residual velocity error $\Delta V$ equal to the norm $\Delta V = (|S.VD|)^2$ of a vector product S.VD, where S is an nxn matrix, n being the number of satellites used, and VD is a measured velocity vector whose components are the n velocity measurements along the director axes between the receiver and each of the n satellites, the matrix S being calculated on the basis of the following formula, where H is the one nx4 matrix of the director cosines of these axes in a fixed terrestrial spatio-temporal reference frame, $H^T$ is the transpose of this matrix H, and I is the nxn identity matrix: $S = I - H(H^T.H)^{-1}.H^T$.

3. Receiver according to Claim 2, **characterized in that** the means for calculating the divergence comprise means for calculating a normalized residue $\Delta V_{nr}$ equal to $\Delta V/\sigma^2$, where $\sigma$ is an estimated velocity measurement noise.

4. Receiver according to Claim 3, **characterized in that** the square of the velocity measurement noise is estimated on the basis of means for calculating a sliding average, over several successive measurements, of $\Delta V/n-4$.

5. Receiver according to one of Claims 1 or 2, **characterized in that** it comprises means for giving an alarm signal if the divergence measurement exceeds a given threshold.

6. Receiver according to Claim 5, **characterized in that** the threshold is selected from a table containing a threshold value for each number n of satellites.

7. Receiver according to one of Claims 1 to 6, **characterized in that** it comprises means for calculating a velocity radius of protection for a given probability of non detection, on the basis of the formula RPE = $\max(\theta^{1/2}. \Delta H_i, \sigma)$ for i = 1 to n, where $\sigma$ is an estimated velocity measurement noise value, $\theta$ is a parameter selected as a function of number n from a table containing a respective numerical value for various possible values of n, and $\Delta H_i$ is the difference between the value of the parameter PDOP, which is the position precision dilution, for the constellation of n satellites and the value of this same parameter for the constellation of n-1 satellites from which the first satellite is excluded.

**Patentansprüche**

1. Empfänger für Positioniersignale von Satelliten mit Mitteln zur Berechnung der Position, die gleichzeitig mit mindestens n=4 Satelliten zusammenwirken, mit Mitteln zur Berechnung der Geschwindigkeit des Empfängers, die die Geschwindigkeit des Empfängers gemäß den Richtachsen bestimmen können, die diesen Empfänger mit jedem der Satelliten verbinden, und mit Mitteln zur Berechnung eines Geschwindigkeitsvektors des Empfängers in einem festen terrestrischen Bezugssystem ausgehend von den Geschwindigkeiten gemäß den Richtachsen und ausgehend von einer Matrix von Vektoren, die die Richtungen dieser Richtachsen in dem festen Bezugssystem darstellen, **dadurch gekennzeichnet, daß** der Empfänger außerdem Mittel zur Berechnung eines Werts enthält, der für die Abweichung zwischen den Geschwindigkeitsmessungen auf den n Richtachsen kennzeichnend ist und eine Information über die Gültigkeit des Geschwindigkeitsvektors des Empfängers in dem festen Bezugssystem darstellt.

2. Empfänger für Positioniersignale von Satelliten, **dadurch gekennzeichnet, daß** die Mittel zur Berechnung des Werts der Abweichung Mittel zur Berechnung eines Restwerts $\Delta V$ des Geschwindigkeitsfehlers entsprechend der Beziehung $\Delta V = (|S \cdot VD|)^2$ eines Vektorprodukts $S \cdot VD$ enthalten, wobei S eine Matrix n*n, n die Anzahl der eingesetzten Satelliten und VD ein gemessener Geschwindigkeitsvektor ist, dessen Komponenten die n Geschwindigkeitswerte gemäß den Richtachsen zwischen dem Empfänger und jedem der n Satelliten bilden, und daß die Matrix S ausgehend von der nachfolgenden Formel berechnet wird, in der H eine Matrix n*4 der Kosinusrichtwerte dieser Achse in einem festen räumlich-zeitlichen terrestrischen Bezugssystem, $H^T$ die Transponierte zur Matrix H und I die Identitätsmatrix n*n bedeutet: $S = I - H(H^T \cdot H)^{-1} \cdot H^T$.

3. Empfänger nach Anspruch 2, **dadurch gekennzeichnet, daß** die Mittel zur Berechnung der Divergenz Mittel zur Berechnung eines normierten Restwerts $\Delta V_{nr} = \Delta V/\sigma^2$ enthalten, wobei $\sigma$ ein Schätzwert des Rauschens der Geschwindigkeitsmessung ist.

4. Empfänger nach Anspruch 3, **dadurch gekennzeichnet, daß** das Quadrat des Rauschens der Geschwindigkeitsmessung ausgehend von Rechenmitteln für einen gleitenden Mittelwert über mehrere aufeinanderfolgende Meßzyklen von $\Delta V/n-4$ geschätzt wird.

5. Empfänger nach einem der Ansprüche 1 und 2, **dadurch gekennzeichnet, daß** er Mittel besitzt, die ein Alarmsignal liefern, wenn der Meßwert der Abweichung eine bestimmte Schwelle überschreitet.

6. Empfänger nach Anspruch 5, **dadurch gekennzeichnet, daß** der Schwellwert aus einer Tabelle ausgewählt wird, die einen Schwellwert für jede Anzahl n von Satelliten enthält.

7. Empfänger nach einem der Ansprüche 1 bis 6, **dadurch gekennzeichnet, daß** er Mittel zur Berechnung eines Schutzradius der Geschwindigkeit für eine gegebene Wahrscheinlichkeit der Nicht-Erfassung ausgehend von der Formel RPE = Max $(\Theta^{1/2} \cdot \Delta H_i, \sigma)$ für $1 \leq i \leq n$ enthält, wobei $\sigma$ ein Schätzwert des Meßrauschens der Geschwindigkeit, $\Theta$ ein abhängig von der Anzahl n aus einer Tabelle ausgewählter Parameter ist, wobei die Tabelle für verschiedene mögliche Werte von n je einen digitalen Wert enthält, und $\Delta H_i$ die Differenz zwischen dem Wert des Parameters PDOP, der die Auflösung der Positionsgenauigkeit für die Konstellation von n Satelliten und den Wert dieses gleichen Parameters für die Konstellation von n-1 Satelliten darstellt, aus der der erste Satellit ausgeschlossen wurde.